# DEMANDE DE BREVET EUROPEEN

(11) **EP 1 059 743 A1**
(43) Date de publication de la demande: **13.12.2000**
(21) Numéro de dépôt: 00401597.0
(22) Date de dépôt: 07.06.2000
(51) Int. Cl.: H04B 10/13

(54) **Liason de transmission de donées par fibre optique**

(30) Priorité: 08.06.1999 FR 9907182
(71) Demandeur: SAGEM SA, 75116 Paris (FR)
(72) Inventeur: Betoule, Daniel, 75013 Paris (FR)
(74) Mandataire: Bloch, Gérard

(57) **Abrégé**

La liaison de transmission d'informations comporte une fibre optique monomode (2) couplée à ses extrémités à des circuits (1) d'émission d'un flux optique de transmission des informations et à des circuits (3) de réception des informations du flux, les circuits d'émission (1) et les circuits de réception (3) présentant une longueur d'onde de fonctionnement située dans une plage de fonctionnement multimodal de la fibre (2).

## Description

Les fibres optiques remplacent maintenant les conducteurs électriques pour la transmission des données sur de longues distances, entre centraux téléphoniques par exemple, car elles sont insensibles aux parasites et permettent donc d'utiliser des récepteurs très sensibles à des débits élevés.

Une fibre optique présente trois fenêtres de longueurs d'onde de transmission, c'est-à-dire trois plages dans lesquelles se trouve un minimum local d'atténuation, centrées sur les longueurs d'onde à 0,8, 1,3 et 1,5 micron.

Comme la première fenêtre, en-dessous du micron, présente un minimum d'atténuation dont le niveau est supérieur à celui des deux autres fenêtres, l'utilisation de ces dernières tend à se généraliser.

Pour encore améliorer les performances de transmission, en termes de portée et de débit, une nouvelle technologie de fibre optique, dite monomode, a été développée.

Dans l'ancienne technologie multimode, le flux optique de transmission d'une information est réparti sur une pluralité de faisceaux émis simultanément mais qui se séparent et se propagent avec des inclinaisons différentes sur l'axe de la fibre, correspondant à autant de modes de propagation. Chaque faisceau parcourt donc un trajet dont la longueur est d'autant plus grande que son inclinaison est élevée et il est retardé d'autant en réception. Le récepteur reçoit donc des signaux temporellement élargis et ne peut reconnaître valablement chacun qu'après réception des faisceaux les plus retardés, ce qui limite le débit utile.

Dans la nouvelle technologie monomode, qui tend donc à remplacer l'ancienne, le flux ne peut se propager que selon l'axe de la fibre et il n'y a donc pas d'élargissement temporel. Le débit peut atteindre plusieurs centaines de Mbits/s sur des dizaines de kilomètres.

Pour que la transmission soit effectivement monomodale, la fibre présente un diamètre réduit, bien inférieur à la cinquantaine de microns des fibres multimodes, et précisément limité à environ 10 fois la longueur d'onde du flux optique. Comme les deuxième et troisième fenêtres utilisées correspondent à des longueurs d'onde un peu supérieures au micron, le diamètre "limite" d'une dizaine de microns a été choisi, car une réduction supplémentaire réduirait le flux que l'on peut injecter et donc la portée.

Si par contre on utilisait la première fenêtre, le comportement de la fibre deviendrait multimodal et donc présenterait le cumul d'inconvénients constitué par une atténuation élevée, un débit utile limité et un flux optique injecté limité par la faiblesse du diamètre ou nécessitant une connectique de précision et des composants optiques performants.

Les composants optiques, émetteur et récepteur, pour la transmission dans les deux dernières fenêtres présentent l'inconvénient d'être relativement coûteux, du fait qu'il s'agit de séries limitées de composants performants.

Dans le cas du problème particulier que s'est posé la demanderesse, il s'agissait d'établir des liaisons de quelques kilomètres par fibres optiques pour relier des abonnés à un central d'un réseau de transmission d'informations telles qu'images animées ou données informatiques. Le coût des équipements en extrémité de fibre, et donc de toute la liaison, était grevé par le coût de ces composants.

La présente invention vise, de façon générale, à proposer une solution pour abaisser le coût des liaisons par fibres optiques.

A cet effet, l'invention concerne une liaison de transmission d'informations, comportant une fibre optique monomode couplée à ses extrémités à des moyens d'émission d'un flux optique de transmission des informations et à des moyens de réception des informations du flux, caractérisée par le fait que les moyens d'émission et les moyens de réception présentent une longueur d'onde de fonctionnement située dans une plage de fonctionnement multimodal de la fibre.

Ainsi, les composants optoélectroniques d'extrémité de fibre, tels que laser et récepteur, peuvent être des composants grand public, à large diffusion et donc à faible prix.

En outre, un avantage important de la solution de l'invention réside dans le fait que la fibre est intrinsèquement une fibre à hautes performances et pourra par la suite, si le besoin apparaît, servir aussi pour des transmissions monomodales à haut débit dans les deux dernières fenêtres. Il suffira d'ajouter des équipements d'extrémité, de multiplexage de longueur d'onde, sans nécessité de travaux de génie civil.

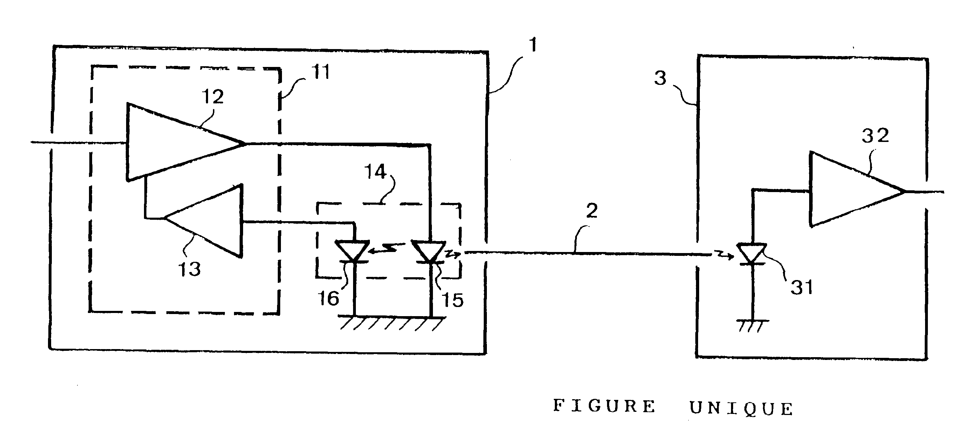

L'invention sera mieux comprise à l'aide de la description suivante d'une forme de réalisation préférée de la liaison optique de l'invention, en référence à la figure unique du dessin annexé qui la représente schématiquement.

La liaison représentée comporte une fibre optique 2 à laquelle sont couplés, aux extrémités respectives de celle-ci, un ensemble émetteur optique 1 et un ensemble récepteur optique 3. Par "extrémité" de la fibre 2, on désigne, de façon générale, tout point d'injection / extraction d'un flux optique, c'est-à-dire les extrémités physiques de la fibre 2 et aussi d'éventuels coupleurs-dérivateurs optiques couplés à la fibre 2 entre ses deux extrémités physiques.

L'ensemble émetteur 1 comporte un circuit électronique émetteur-modulateur 11 de commande d'un micro-boîtier laser 14, ici de type TO.

Le circuit émetteur 11 comporte un amplificateur 12 d'amplification de signaux électriques d'informations à transmettre à l'ensemble récepteur 3, provenant d'un circuit extérieur à la liaison optique. Un circuit de contre-réaction 13 commande une entrée de régulation de niveau de sortie de l'amplificateur 12.

Le boîtier laser 14 comporte une diode laser 15 montée dans un connecteur de couplage optique à la fibre 2 (ou couplée à une fibre amorce soudée à la fibre 2) et couplée optiquement à une diode photodétectrice 16 commandant le circuit de contre-réaction 13. La diode laser 15 est un composant laser grand public, d'un type utilisé par ailleurs pour les lecteurs de disques laser, à 0,85 µm, ou de vidéodisques, à 0,65 µm, ou encore de disques compacts, à 0,78 µm, que l'on peut désigner globalement par lecteurs lasers de supports d'informations tels que disques et bandes. Un tel microboîtier laser 14 est commercialisé par exemple par la société ROHM, Japon, sous les références RLD 78MV et RLD 78 PAT 1K et par la société japonaise SONY sous la référence SLD 104 AV.

Afin de limiter le bruit modal laser en dessous d'un seuil acceptable, la diode laser 15 présente ici un nombre de modes transverses suffisant, ici supérieur à cinq, à mi-hauteur du signal de mode principal.

La fibre 2, commercialisée sous l'appellation de fibre monomodale et conforme ici aux recommandations G 652, G 653, G 654 et G 655 de l'UIT, présente un diamètre de coeur de 8 µm. Une gaîne optique, d'indice optique inférieur à l'indice optique constant du matériau de coeur, crée un saut d'indice en périphérie du coeur, qui forme une barrière confinant le flux optique à l'intérieur du coeur.

L'ensemble récepteur 3 comporte en tête une diode réceptrice photo-détectrice 31 en micro-boîtier TO couplée optiquement à l'extrémité de la fibre 2 et reliée à l'entrée d'un circuit amplificateur/démodulateur à faible bruit 32. La diode réceptrice 31 est ici de technologie silicium, qui fonctionne dans une large plage de longueurs d'onde en dessous du micron, comprenant en particulier la première fenêtre, autour de 0,85 µm, et les deux autres longueurs d'ondes citées plus haut pour la diode laser 15. Tout comme la diode laser 15, la diode 31 est un composant grand public pour les lecteurs d'informations indiqués plus haut. D'une façon générale, la longueur d'onde de fonctionnement de la liaison 1, 2, 3 est comprise dans la plage s'étendant de 0,6 à 0,9 micron. La photodiode 3 est par exemple commercialisée par la société OPTEK sous la référence OPF 480 et par la société TEMIC, en France, sous la référence BPW 97.

Le fonctionnement de la liaison 1, 2, 3 va maintenant être expliqué.

La liaison peut transmettre en fonctionnement multimodal des signaux analogiques et des signaux numériques. Dans le premier cas, les signaux, vidéo par exemple, reçus de l'extérieur sous forme électrique par l'émetteur 1 sont amplifiés linéairement par l'amplificateur 12. Le courant traversant la diode laser 15, qui relie la sortie de l'amplificateur 12 à la masse, est modulé par ce dernier et produit une modulation correspondante de la puissance optique de la diode laser 15. Au repos, celle-ci est ici polarisée à mi-puissance par le circuit de contre-réaction 13.

La diode réceptrice 31, dont la cathode est à la masse et l'anode est polarisée par une tension d'alimentation négative, détecte une modulation correspondante du nombre de photons reçus et sa résistance équivalente varie de même. Le récepteur 32 détecte ces variations de résistance diode et restitue ainsi en sortie un signal électrique reproduisant le signal de l'émetteur 1.

Le bruit modal, provoqué par le fait que la fibre 2 est utilisée en transmission multimodale, en-dessous de son seuil de coupure monomode de 1 µm de longueur d'onde environ, a des effets limités par le fait qu'il se répartit ici sur plus de cinq modes.

La transmission de données numériques, sous forme d'impulsions successives, ne diffère de ce qui vient d'être décrit que par le fait que l'amplificateur 12 est numérique, avec un codage des bits approprié à la transmission (récupération du rythme bit, valeur moyenne du flux sensiblement constante).

Le circuit de contre-réaction 13 détecte la valeur crête des signaux optiques, analogiques ou numériques, et asservit le point de repos de l'amplificateur 12 pour que cette valeur crête ne s'écarte pas sensiblement d'une valeur de consigne, pour laquelle la diode laser 15 émet à sa puissance maximale prévue, sans atteindre un seuil de destruction. La photo-diode 16 de surveillance de la diode laser 15 et le circuit 13 sont ainsi dans une boucle de régulation du niveau de puissance d'émission de la diode laser 15.

Le fonctionnement en multimode de la fibre 2 à saut d'indice provoque l'élargissement des impulsions ou, d'une façon générale, la dispersion temporelle du signal transmis, alors que l'utilisation d'une fibre multimode, à gradient d'indice, aurait permis de limiter cette dispersion. Cependant, des essais ont montré que la liaison de l'invention pouvait fonctionner jusqu'à 50 Mbits/s.km. Un abonné d'un réseau câblé optique -numérique peut ainsi, à 5 km d'un central du réseau, recevoir un flux de données à un débit de 10 Mbits/s.

## Revendications

1. Liaison de transmission d'informations, comportant une fibre optique monomode (2) couplée à ses extrémités à des moyens (1) d'émission d'un flux optique de transmission des informations et à des moyens (3) de réception des informations du flux, caractérisée par le fait que les moyens d'émission (1) et les moyens de réception (3) présentent une longueur d'onde de fonctionnement située dans une plage de fonctionnement multimodal de la fibre (2).

2. Liaison selon la revendication 1, dans laquelle les moyens d'émission (1) comportent un émetteur laser (14) pour lecteur de supports d'informations.

3. Liaison selon la revendication 2, dans laquelle le laser (15) de l'émetteur (14) présente un nombre de modes transverses supérieur à cinq à mi-hauteur du signal de mode principal.

4. Liaison selon l'une des revendications 2 et 3, dans laquelle une photo-diode (16) est couplée optiquement au laser (15) dans une boucle (13) de régulation du niveau d'émission du laser (15).

5. Liaison selon l'une des revendications 1 à 4, dans laquelle les moyens de réception (3) comportent une photo-diode (31) pour lecteur de supports d'informations.

6. Liaison selon l'une des revendications 1 à 5, dans laquelle la longueur d'onde du fonctionnement est comprise dans la plage s'étendant de 0,6 à 0,9 micron.
